Europäisches Patentamt

European Patent Office

Office européen des brevets

(11) Veröffentlichungsnummer: **0 283 889 B1**

# EUROPÄISCHE PATENTSCHRIFT

(45) Veröffentlichungstag der Patentschrift: **30.12.92**

(51) Int. Cl.⁵: **G01R 19/25**, G01R 15/12

(21) Anmeldenummer: **88103989.5**

(22) Anmeldetag: **14.03.88**

(54) **Verarbeitungsmodul zur Erfassung analoger Eingangsgrössen, insbesondere für Mikroprozessorsysteme und speicherprogrammierbare Steuerungen.**

(30) Priorität: **25.03.87 DE 3709805**

(43) Veröffentlichungstag der Anmeldung:
**28.09.88 Patentblatt 88/39**

(45) Bekanntmachung des Hinweises auf die
Patenterteilung:
**30.12.92 Patentblatt 92/53**

(84) Benannte Vertragsstaaten:
**AT BE CH DE FR GB IT LI NL SE**

(56) Entgegenhaltungen:

**FUNKSCHAU, no. 7, April 1982, Seiten 53-55, München, DE; K. RÜGER: "Belastungsfreies Messen auch in den Strombereichen"**

**D.H. SHEINGOLD: "Analog-Digital Conversion Handbook", 1986, Seite 35, Prentice-Hall, Englewood Cliffs, GB**

(73) Patentinhaber: **Klöckner-Moeller GmbH
Hein-Moeller-Strasse 7-11
W-5300 Bonn 1(DE)**

(72) Erfinder: **Wratil, Peter, Dipl.-Phys. Dr.
Drosselweg 38
W-5060 Bergisch-Gladbach(DE)**
Erfinder: **Schröter, Reinhart, Dipl. Ing.
Südstrasse 18
W-5216 Niederkassel 6(DE)**

## Beschreibung

Die Erfindung bezieht sich auf ein Verarbeitungsmodul zur Meßwerterfassung analoger Eingangsgrößen, insbesondere bei Mikroprozessorsystemen oder speicherprogrammierbaren Steuerungen, gemäß dem Oberbegriff des Anspruchs 1.

Die Konversion analoger Eingangsgrößen in Digitalwerte ist bekannt und stellt den heutigen Stand der Technik dar. Vorwiegend findet die Analog/Digital-Wandlung ihre Anwendung bei Messgeräten mit digitaler Anzeige und in elektronischen Steuerungssystemen, wobei die in digitale Werte gewandelten analogen Messwerte, dem Steuersystem zur Weiterverarbeitung angeboten werden.

Marktübliche Mikroprozessor compatible A/D-Wandler benutzen, wie z. B. der AD 7581 von Analog Devices (s. Databook von Analog Devices 1984 S. 10/159), auch gemultiplexte Eingänge, die von einer Kontrollogik zyklisch angesprochen, deren Momentanwerte in einem Datenspeicher abgelegt und dem Datenbus angeboten werden.

Nachteilig hierbei ist, daß ausschließlich Spannungsmesswertgrößen verarbeitet werden können.

Bekannt sind auch programmierbare Messverstärker, wie der AD 625 von Analog Devices (s. Databook v. Analog Devices Update and Selection Guide S. 3/111).

Hierbei wird der Verstärkungsfaktor durch hardwaremäßiges Beschalten des Moduls mittels Referenzwiderständen erreicht.

Bekannt ist auch ein Verfahren, unterschiedliche Eingangsspannungen durch die interne Verstärkung des Meßsytems anzupassen.

Bei den aufgeführten Modulen, Systemen und Verfahren ist es von Nachteil, daß die Verarbeitung unterschiedlicher Signalformen, wie z. B. Strom oder Spannung oder Anpassung an Sensoren, an ein und demselben Messeingang ohne zusätzliche Hardwaremodifikation oder passive Schaltelemente wie z. B. Relais o. a., nicht möglich ist.

Aufgabe der Erfindung ist es, ein Verarbeitungsmodul zur Meßwerterfassung analoger Eingangsgrößen der eingangs genannten Art derart zu verbessern, daß jeder Eingang, je nach Anwendung, flexibel beschaltet werden kann und zur Aufnahme von Spannungsmeßwertgrößen oder Strommeßwertgrößen oder die Anpassung an Sensoren dient, wobei die Eingangskonfiguration und die Meßwertanpassung, ohne zusätzliche Hardwaremodifikation oder passive Schaltelemente wie z. B. Relais o. a., nur durch die vor dem Meßergebnis vom Anwender durchgeführte Programmierung erfolgt.

Diese Aufgabe wird erfindungsgemäß durch den kennzeichnenden Teil der Hauptanspruchs 1 gelöst.

Der Unteranspruch 2 kennzeichnet eine vorteilhafte Ausbildung der Erfindung.

Eine beispielhafte Ausführungsform des erfindungsgemäßen Verarbeitungsmoduls wird im folgenden anhand der beigefügten Zeichnung beschrieben.

Auf dieser zeigt

Fig. 1 das Prinzipschaltbild eines Verarbeitungsmoduls nach der Erfindung.

Fig. 2 das Blockschaltbild des erfindungsgemäßen Verarbeitungsmoduls.

Fig. 3 den prinzipiellen Aufbau des Schreib-Lese-Speichers des erfindungsgemäßen Verarbeitungsmoduls.

Fig. 4 die in dem Programmspeicher des erfindungsgemäßen Verarbeitungsmoduls beispielhaft abgespeicherten Meßgrößen und Meßbereiche.

Fig. 5 die Stellung der Halbleiterschalter des erfindungsgemäßen Verarbeitungsmoduls bezogen auf die Eingänge und deren in Fig. 4 angegebenen beispielhaften Meßgrößen und Meßbereiche.

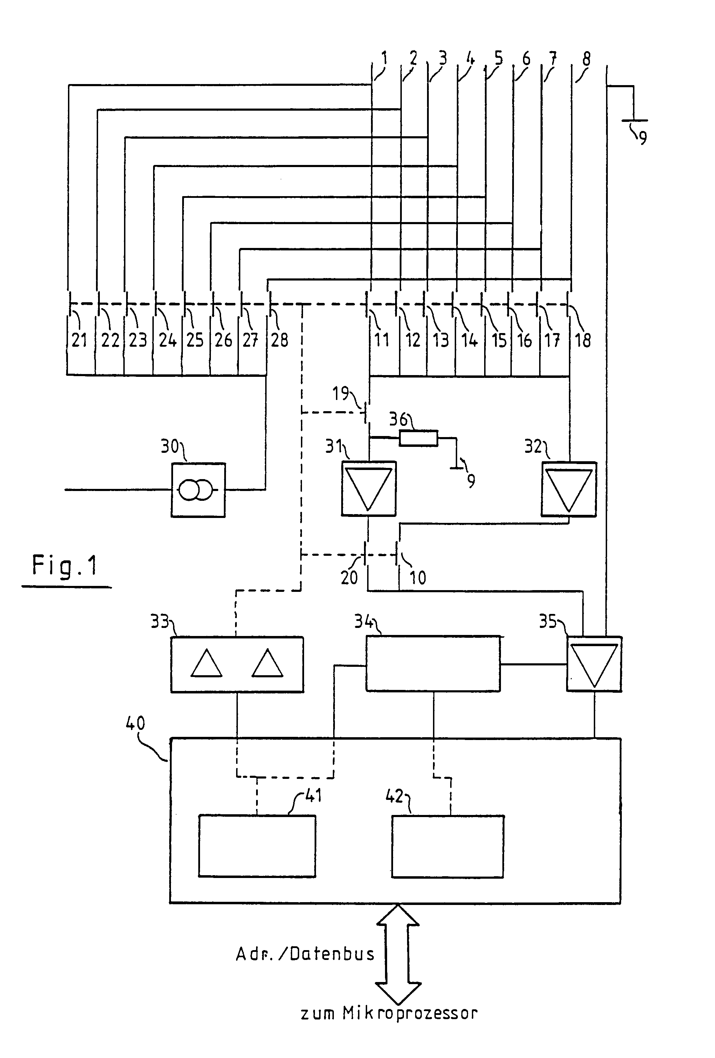

Fig. 1 zeigt das Prinzipschaltbild eines Verarbeitungsmoduls 50 nach der Erfindung. Hierbei sind jedem Meßeingang 1-8 je zwei Halbleiterschalter 11-18 und 21-28 zugeordnet. Hinter den Halbleiterschaltern 11-18 sind zwei Eingangsverstärker 31 und 32 angeordnet.

Der Eingagsverstärker 32 wird direkt von einem der Halbleiterschalter 11-18 angesteuert, während der Eingangsverstärker 31 zusätzlich über den Halbleiterschalter 19 angesteuert wird. Die Halbleiterschalter 10 und 20 entscheiden, welche Meßgröße von welchem Eingangsverstärker 31, 32 dem Folgeverstärker 35 zugeführt werden soll. Der Folgeverstärker 35 bezieht die ihm angebotene analoge Meßgröße auf die Referenzmasse 9 und stellt die Meßgröße dem A/D-Wandler 34 zur Verfügung. Der A/D-Wandler 34 konvertiert die Meßgröße in einen digitalen Meßwert, der dann in den Schreib-Lese-Speicher 42 der Kontrolleinheit 40 eingelesen wird und dem Steuerungssystem auf dem Adr./Datenbus zur Weiterverarbeitung angeboten wird. Allein entscheidend für die Aktivierung der Halbleiterschalter 11-28 ist das Programm, welches vor dem Meßereignis vom Anwender in den Programmspeicher 41 eingeschrieben wird. Aus diesem Programminhalt des Programmspeichers 41 resultiert die zu verarbeitende analoge Meßgröße und der zugehörige Meßbereich für jeden Messeingang 1-8 des Verarbeitungsmoduls 50.

Durch die Anordnung der Halbleiterschalter 11-28 und der Schaltungskonfiguration aus Eingangsverstärker 31 und 32, dem Folgeverstärker 35, der Konstantstromquelle 30, dem A/D-Wandler 34 und der Kontrolleinheit 40 in Verbindung mit der Schaltlogik 33 ergibt sich, daß alle möglichen analogen Meßgrößen von dem erfindungsgemäßen Verarbeitungsmodul 50 verarbeitet werden können.

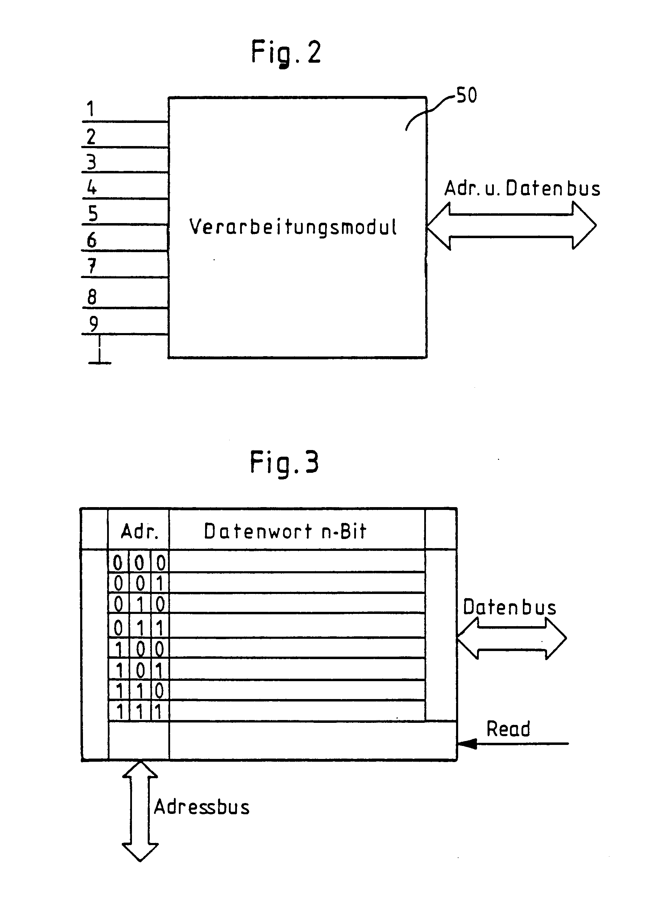

Fig. 2 zeigt das Blockschaltbild des erfindungsgemäßen Verarbeitungsmoduls 50.

Fig. 3 zeigt den prinzipiellen Aufbau des Schreib-Lese-Speichers 42, worin zyklisch die Momentanwerte der Meßeingänge abgespeichert werden. Seine Adressierung erfolgt direkt vom Mikroprozessor des Steuersystems. Das Datenwort wird durch Aktivierung des Read-Signals auf den Datenbus des Steuerungssystems gelesen.

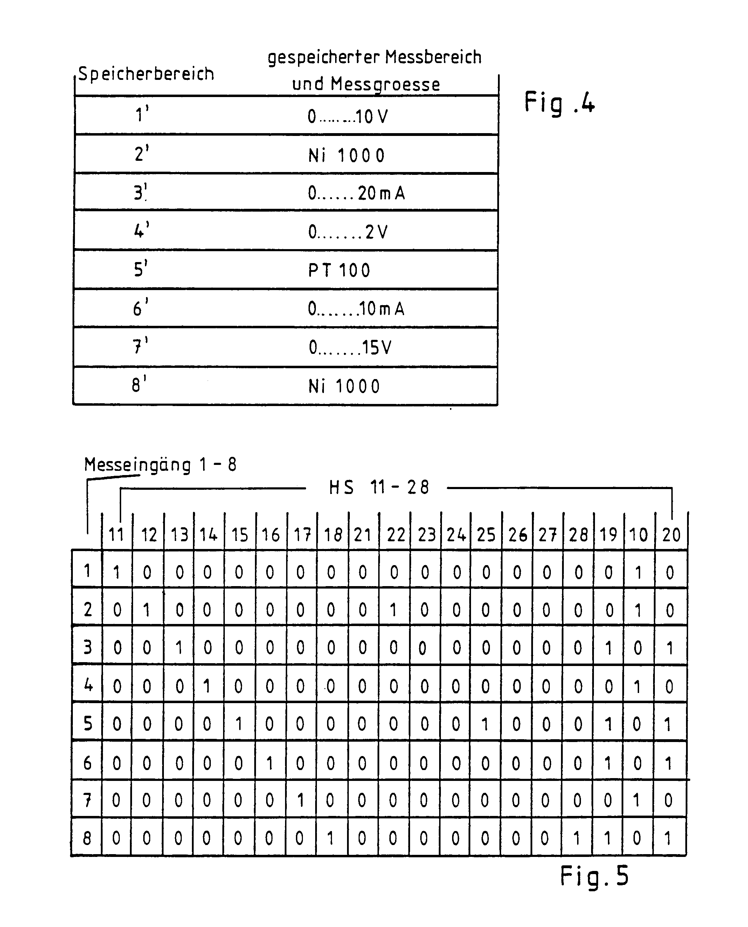

Fig. 4 zeigt beispielhafte Meßgrößen und Meßbereiche, welche in die entsprechenden Speicherbereiche 1-8 des Programmspeichers 41 anwenderseitig programmiert wurden.

Fig. 5 zeigt die Stellung der Halbleiterschalter 11-28 für die in Fig. 4 angegebenen Meßgrößen der Meßeingänge 1-8.

Für die Meßeingänge 1-8 werden vom Anwender die Meßgrößen und die Meßbereiche, wie in Fig. 4 dargestellt, in den Programmspeicher 41 programmiert.

Anhand der nachfolgend beschriebenen ersten drei Verarbeitungsschritte von Speicherbereich 1'-3' des Programmspeichers soll der funktionelle Ablauf des Verarbeitungsmoduls 50 in Verbindung mit den Fig. 1 - Fig. 5 näher erläutert werden.

Wird der Speicherbereich 1' des Programmspeichers 41 vom Mikroprozessor des Steuersystems adressiert, erfolgt durch die Schaltlogik 33 die Stellung der Halbleiterschalter, im folgenden HS genannt, 11-28 wie in Fig. 5 für den Meßeingang 1 dargestellt.

HS 11 und HS 10 sind geschlossen. Die Meßspannung von Meßeingang 1 erreicht über HS 11 den Eingangsverstärker 32 und wird dem Folgeverstärker über HS 10 zugeführt.

Der Folgeverstärker übergibt diese analoge Meßgröße dem A/D-Wandler zur Konversion in einer digitalen Meßwert, welcher dann in den Schreib-Lese-Speicher 42 mit der Adresse 000 als Datenwort mit n-Bit abgespeichert wird. Fig. 3.

Am Meßeingang 2 ist nun ein Temperaturbereich über ein Sensorelement, hier Ni 1000, zu erfassen.

Der Speicherbereich 2' des Programmspeichers 41 ist entspechend programmiert. Wird der Speicherbereich 2' des Programmspeichers 41 vom Mikroprozessor des Steuersystems adressiert, erfolgt die Stellung der HS 11-28 über die Schaltlogik 33 für den Meßeingang 2, wie in Fig. 5 dargestellt. Die HS 10, 12 und 22 sind geschlossen.

Über HS 22 fließt ein Strom, entsprechend der Konstantstromquelle 30 in den Meßeingang 2 über das Sensorelement, hier Ni 1000, gegen die Referenzmasse 9. Die dabei erzeugte Referenzspannung erreicht über HS 12 den Eingagsverstärker 32 und, dem entsprechend verstärkt,über HS 10 den Folgeverstärker 35.

Die Bereitstellung des analogen Meßwertes zur Konversion und Abspeicherung des digitalen Meßwertes in den Schreib-Lese-Speicher 42 unter die Adresse 001 steuert die Kontrolleinheit 40.

Wird der Speicherbereich 3' des Programmspeichers 41 von dem Mikroprozessor des Steuersystems adressiert, Fig. 4, so erfolgt die Stellung der HS 11-28 wie in Fig. 5 für Meßeingang 3 dargestellt.

Hierbei dient ein Strom als analoge Meßgröße der über HS 13 und HS 19 an den Eingangsverstärker gelangt, dessen Eingang über einen Referenzwiderstand 36 gegen die Referenzmasse 9 geschaltet ist. Die aufgrund des Referenzwiderstandes 36 entsprechend verstärkte Meßgröße erreicht über HS 20 den Folgeverstärker 35.

Die Bereitstellung der analogen Meßgröße durch den Folgeverstärker 35, die Konversion in einen digitalen Meßwert und die Abspeicherung unter die Adresse 010 in den Schreib-Lese-Speicher 42 der Kontrolleinheit 40, erfolgt wie bei den ersten zwei Verarbeitungsschritten.

Zweckmäßigerweise arbeitet der A/D-Wandler 34 nach dem Wilkinson Prinzip, wodurch auf eine zusätzliche Sample/Hold-Schaltung verzichtet werden kann.

Wie im Anspruch 2 gekennzeichnet, ist es bei dem erfindungsgemäßen Verarbeitungsmodul 50 von Vorteil, daß der Programmspeicher 41 einen zusätzlichen Speicherbereich aufweist, worin der Anwender für jede zu verarbeitende Meßgröße, zur Angleichung an ein einheitliches Rastermaß, einen Verstärkungsfaktor programmiert.

**Patentansprüche**

1. Verarbeitungsmodul (50) zur Erfassung analoger Eingangsgrößen insbesondere für Mikroprozessorsysteme und speicherprogrammierbare Steuerungen, bestehend aus einem Eingangsverstärker, (31, 32), einem Folgeverstärker (35), einem A/D-Wandler (34), einer Kontrolleinheit (40) und mehreren Eingängen (1-8) zur Aufnahme der analogen Messgrößen, **dadurch gekennzeichnet,** daß

- die Kontrolleinheit (40) einen Programmspeicher (41) aufweist, der für jeden Messeingang (1-8) über einen eigenen Speicherbereich (1'-8') verfügt, in den der dem jeweiligen Messeingang (1-8) zugeordnete, analoge Messbereich und die Art der analogen Messgröße programmiert sind,
- jedem Messeingang (1-8) zwei Halbleiterschalter (11-18, 21-28) zugeordnet sind,
- die Messeingänge (1-8) im Multiplexverfahren innerhalb eines Meßzyklus zyklisch auf Messbereich, Art der analogen Messgröße und den Momentanwert der analogen Messgröße abfragbar sind, wobei

- abhängig von dem Speicherinhalt des Programmspeichers (41) die jeweiligen Halbleiterschalter (11-18, 21-28) für jeden Messeingang (1-8) innerhalb des Messzyklus aktiviert sind,
- der Momentanwert der jeweiligen analogen Messgröße über Eingangsverstärker (31, 32) und den Folgeverstärker (35) dem A/D Wandler (34) zur Konversion zugeführt ist und in einen Schreib-Lese-Speicher (42) der Kontrolleinheit (40) eingeschrieben ist.

2. Verarbeitungsmodul zur Erfassung analoger Eingangsgrößen nach Anspruch 1, **dadurch gekennzeichnet,** daß der Programmspeicher (41) einen Speicherbereich aufweist, dessen Programminhalt den A/D Wandler (34) veranlaßt, alle ihm zur Konversion angebotenen analogen Meßgrößen in ein gleiches Rastermaß zu konvertieren.

## Claims

1. Processing module (50) for the acquisition of analogue input values, in particular for microprocessor systems and programmable controllers, consisting of an input amplifier (31, 32), a follower amplifier (35), an A/D converter (34), a monitoring unit (40), and a number of inputs (1-8) for the reception of the analogue measured values, **characterized in that**

- The monitoring unit (40) includes a program memory (41) which has a memory area (1'-8') for each measured value input (1-8), into which the analogue measured range assigned to each measured value input (1-8) and the type of analogue measured value are programmed,
- Two semiconductor switches (11-18, 21-28) are assigned to each measured value input (1-8),
- The measured value inputs (1-8) can be interrogated by the multiplex procedure within one measurement cycle for measured range, type of analogue measured value and instantaneous value of the analogue measured value, whereby
- The respective semiconductor switches (11-18, 21-28) are activated for each measured value input (1-9) within the measurement cycle in accordance with the memory content of the program memory (41),
- The instantaneous value of the respective analogue measured value is fed via the input amplifier (31, 32) and the follower amplifier (35) to the A/D converter (34) for conversion, and is written into a read-write memory (42) in the control unit (40).

2. Processing module for the acquisition of analogue input values in accordance with claim 1, **characterized in that** the program memory (41) possesses a memory area the program content of which causes the A/D converter (34) to convert into an identical scale all analogue measured values supplied to it for conversion.

## Revendications

1. Module de traitement (50) pour l'acquisition de valeurs d'entrée analogiques, plus particulièrement pour systèmes de microprocesseur et commandes programmables, se composant d'un amplificateur d'entrée (31, 32), d'un amplificateur de poursuite (35), d'un convertisseur analogique/numérique (34), d'une unité de contrôle (40) et de plusieurs entrées (1-8) pour la réception des valeurs de mesure analogiques, **caractérisé en ce que**

- l'unité de contrôle (40) comprend une mémoire de programmes (41) qui dispose pour chacune des entrées de mesure (1-8) d'un domaine de mémoire propre (1'-8'), dans lequel le domaine de mesure analogique assigné à chacune des entrées (1-8), ainsi que le type de valeur de mesure analogique sont programmés,
- deux commutateurs semi-conducteurs (11-18, 21-28) sont assignés à chaque entrée de mesure (1-8),
- les entrées de mesure (1-8) peuvent être interrogées par procédure multiplex dans un cycle de mesure quant au domaine de mesure, au type de valeur de mesure analogique et à la valeur instantanée de la valeur de mesure analogique, sachant que
- les commutateurs semi-conducteurs respectifs (11-18, 21-28) sont activés pour chaque entrée de mesure (1-8) dans le cycle de mesure en fonction du contenu de la mémoire de programmes (41),
- la valeur instantanée de la valeur de mesure analogique correspondante est transmise via l'amplificateur d'entrée (31,32) et l'amplificateur de poursuite (35) au convertisseur analogique/numérique et écrite dans une mémoire lecture-écriture (42) de l'unité de contrôle (40).

2. Module de traitement pour l'acquisition de valeurs d'entrée analogiques conforme à la revendication 1, **caractérisé en ce que** la mémoire de programmes (41) comprend un domaine de mémoire dont le contenu a pour effet que le convertisseur analogique/numérique convertit toutes les valeurs de mesure analogiques qui lui sont transmises en un module identique.

EP 0 283 889 B1

Fig.1

Adr./Datenbus

zum Mikroprozessor

6

# Fig. 2

| 1 |
| 2 |
| 3 |
| 4 |
| 5 |
| 6 |
| 7 |
| 8 |
| 9 |

Verarbeitungsmodul

~50

Adr. u. Datenbus

# Fig. 3

| Adr. | Datenwort n-Bit |
|------|-----------------|
| 0 0 0 | |
| 0 0 1 | |
| 0 1 0 | |
| 0 1 1 | |
| 1 0 0 | |
| 1 0 1 | |
| 1 1 0 | |
| 1 1 1 | |

Datenbus

Read

Adressbus

| Speicherbereich | gespeicherter Messbereich und Messgroesse |
|:---:|:---:|
| 1' | 0........10 V |
| 2' | Ni 1000 |
| 3' | 0......20 mA |
| 4' | 0.......2 V |
| 5' | PT 100 |
| 6' | 0......10 mA |
| 7' | 0.......15 V |
| 8' | Ni 1000 |

**Fig .4**

Messeingäng 1 – 8

HS 11 – 28

| | 11 | 12 | 13 | 14 | 15 | 16 | 17 | 18 | 21 | 22 | 23 | 24 | 25 | 26 | 27 | 28 | 19 | 10 | 20 |
|:---:|:--:|:--:|:--:|:--:|:--:|:--:|:--:|:--:|:--:|:--:|:--:|:--:|:--:|:--:|:--:|:--:|:--:|:--:|:--:|
| 1 | 1 | 0 | 0 | 0 | 0 | 0 | 0 | 0 | 0 | 0 | 0 | 0 | 0 | 0 | 0 | 0 | 0 | 1 | 0 |
| 2 | 0 | 1 | 0 | 0 | 0 | 0 | 0 | 0 | 0 | 1 | 0 | 0 | 0 | 0 | 0 | 0 | 0 | 1 | 0 |
| 3 | 0 | 0 | 1 | 0 | 0 | 0 | 0 | 0 | 0 | 0 | 0 | 0 | 0 | 0 | 0 | 0 | 1 | 0 | 1 |
| 4 | 0 | 0 | 0 | 1 | 0 | 0 | 0 | 0 | 0 | 0 | 0 | 0 | 0 | 0 | 0 | 0 | 0 | 1 | 0 |
| 5 | 0 | 0 | 0 | 0 | 1 | 0 | 0 | 0 | 0 | 0 | 0 | 0 | 1 | 0 | 0 | 0 | 1 | 0 | 1 |
| 6 | 0 | 0 | 0 | 0 | 0 | 1 | 0 | 0 | 0 | 0 | 0 | 0 | 0 | 0 | 0 | 0 | 1 | 0 | 1 |
| 7 | 0 | 0 | 0 | 0 | 0 | 0 | 1 | 0 | 0 | 0 | 0 | 0 | 0 | 0 | 0 | 0 | 0 | 1 | 0 |
| 8 | 0 | 0 | 0 | 0 | 0 | 0 | 0 | 1 | 0 | 0 | 0 | 0 | 0 | 0 | 0 | 1 | 1 | 0 | 1 |

**Fig.5**